Europäisches Patentamt

European Patent Office

Office européen des brevets

(19)

(11) Veröffentlichungsnummer: **0 357 887 B1**

(12)

# EUROPÄISCHE PATENTSCHRIFT

(45) Veröffentlichungstag der Patentschrift:
18.09.91 Patentblatt 91/38

(51) Int. Cl.$^5$: **F16F 15/12**

(21) Anmeldenummer: 89110260.0

(22) Anmeldetag: 07.06.89

(54) Torsionsschwingungsdämpfer mit einer Rotationsachse.

(30) Priorität: 01.08.88 DE 3826088

(43) Veröffentlichungstag der Anmeldung:
14.03.90 Patentblatt 90/11

(45) Bekanntmachung des Hinweises auf die
Patenterteilung:
18.09.91 Patentblatt 91/38

(84) Benannte Vertragsstaaten:
AT DE ES FR GB IT SE

(56) Entgegenhaltungen:
EP-A- 0 218 078
EP-A- 0 266 479
DE-A- 2 250 890
GB-A- 2 145 498
US-A- 2 159 235

(73) Patentinhaber: Firma Carl Freudenberg
Höhnerweg 2-4
W-6940 Weinheim/Bergstrasse (DE)

(72) Erfinder: Andrä, Rainer Horst, Dr.
Dehrner Strasse 10
W-6250 Limburg 5 (DE)

EP 0 357 887 B1

## Beschreibung

Die Erfindung betrifft einen Torsionsschwingungsdämpfer nach dem Oberbegriff von Anspruch 1.

Ein solcher Torsionsschwingungsdämpfer ist aus der US-A-5458773 bekannt. Umfangs- und Längsbeweglichkeit lassen sich dabei unabhängig voneinander einstellen, die Wirksamkeit ist, bezogen auf das Volumen und Gewicht, jedoch relativ gering.

Der Erfindung liegt die Aufgabe zugrunde, einen Torsionsschwingungsdämpfer zu zeigen, bei dem die Längs- und die Umfangsbeweglichkeit unabhängig voneinander auf bestimmte Werte eingestellt werden können und der, bezogen auf sein Volumen und Gewicht, eine optimale Wirksamkeit aufweist.

Diese Aufgabe wird erfindungsgemäß bei einem Torsionsschwingungsdämpfer der eingangs genannten Art durch die kennzeichnenden Merkmale von Anspruch 1 gelöst. Auf vorteilhafte Ausgestaltungen nehmen die Unteransprüche Bezug.

Bei dem erfindungsgemäßen Torsionsschwingungsdämpfer sind die Haftflächen in Umfangsrichtung gewellt, und bestehen aus Teilbereichen unterschiedlich großer Radialabstände von der Rotationsachse, die gleichmäßig ineinander übergehend ausgebildet sind. Bei relativ vermindertem Volumen und Gewicht läßt sich durch diese Ausbildung eine ausgezeichnete Längsbeweglichkeit des Winkelringes in bezug auf den Nabenring erzielen, ohne daß eine Beeinträchtigung der Umfangsbeweglichkeit des Nabenringes in bezug auf den Trägheitsring in Kauf genommen werden müßte.

Diese wird insbesondere durch den Außenring erbracht, der in axialer Richtung an sich im wesentlichen radial erstreckenden Haftflächen des Winkel- und des Trägheitsringes festgelegt und bei sich drehendem Drehschwingungsdämpfer durch die vorbeistreichende Luft besonders gut gekühlt ist. Die vergleichsweise größeren, elastischen Deformierungen des den Außenring bildenden Gummikörpers können daher nicht zu einer nachteiligen Veränderung der Werkstoffeigenschaften führen. Auch besteht problemlos die Möglichkeit, für die Herstellung des Außenringes einen besonders weichelastischen Gummiwerkstoff zu verwenden und zugleich seine Ausdehnung und die Ausdehnung des Winkelringes in radialer Richtung zu vergrößern. Die auf den Außenring ausgeübte Kühlwirkung ist dementsprechend ebenfalls verbessert.

Stetig veränderte Radialabstände der Haftflächen von der Rotationsachse ergeben sich beispielsweise dann, wenn die Haftflächen in Umfangsrichtung gewellt sind. Die Teilbereiche eines unterschiedlich großen Radialabstandes von der Rotationsachse gehen in einem solchen Falle gleichmäßig ineinander über, was es zugleich erlaubt, zumindest den Nabenring des erfindungsgemäßen Torsionsschwingungsdämpfers durch Tiefziehen aus einem zunächst in ebener Gestalt vorliegenden Stahlblech zu erzeugen. Die Formstabilität ist in diesem Falle ganz besonders groß.

Als besonders vorteilhaft im Hinblick auf eine günstige Wärmeabführung hat es sich erwiesen, wenn der Mantel eines solcherart erzeugten Nabenringes mit der Längsrichtung des Torsionsschwingungsdämpfers einen spitzen Winkel einschließt dergestalt, daß sich eine Aufweitung des Mantels in Richtung seiner Mündung ergibt.

Hieraus resultiert nicht nur eine relative Vergrößerung der an sich verfügbaren Oberfläche, sondern darüber hinaus eine verbesserte Förderwirkung in bezug auf die vorbeistreichende Luft. Auch die bei Einleitung von Biege- bzw. Verkantungsschwingungen in dem Innenring des erfindungsgemäßen Torsionsschwingungsdämpfers erzeugte Wärme wird auf diese Weise abgeführt, ohne daß eine Schädigung des diesen Ring bildenden Werkstoffkörpers befürchtet werden müßte.

Bedingt durch die bei dem erfindungsgemäßen Torsionsschwingungsdämpfer relativ vergrößerten Haftflächen zwischen dem Winkelring und den beiderseits angrenzenden Gummiringen besteht die Möglichkeit, den Winkelring aus Kunststoff zu erzeugen, und damit aus einem Werkstoff, der sich durch ein besonders geringes Raumgewicht auszeichnet. Die Dämpfungswirksamkeit des erfindungsgemäßen Torsionsschwingungsdämpfers erfährt durch eine solche Ausbildung eine deutliche Aufwertung. Als besonders geeignet für die Herstellung des Winkelringes hat sich insbesondere die Verwendung von verstärktem Kunststoff und Aluminium erwiesen.

Bei dem erfindungsgemäßen Torsionsschwingungsdämpfer kann der radiale Zwischenraum zwischen dem Nabenring und dem Trägheitsring nahezu vollständig durch den Innenring, den Außenring und den Winkelring ausgefüllt sein. Insbesondere in Fällen, in welchen der Winkelring aus Kunststoff besteht, ergibt sich in einem solchen Falle eine Ausführung, die in bezug auf ihr Volumen und Gewicht von optimaler Dämpfungswirksamkeit ist und die es darüber hinaus gestattet, die Dämpfungswirksamkeit in axialer Richtung und in Umfangsrichtung unabhängig voneinander zu optimieren und dadurch eine besonders gute Anpassungsmöglichkeit an die unterschiedlichen Anwendungsfälle zu erzielen.

Die Herstellung des erfindungsgemäßen Torsionsschwingungsdämpfers ist problemlos unter Verwendung an sich bekannter Technologien möglich.

Eine beispielhafte Ausführung des erfindungsgemäßen Torsionsschwingungsdämpfers ist in der in der

2

Anlage beigefügten Zeichnung dargestellt. Sie wird nachfolgend näher erläutert. Es zeigen :

Fig. 1    einen Ausschnitt aus der Vorderansicht eines solchen Torsionsschwingungsdämpfers.

Fig. 2    den Torsionsschwingungsdämpfer nach Figur 1 in halbgeschnittener Darstellung.

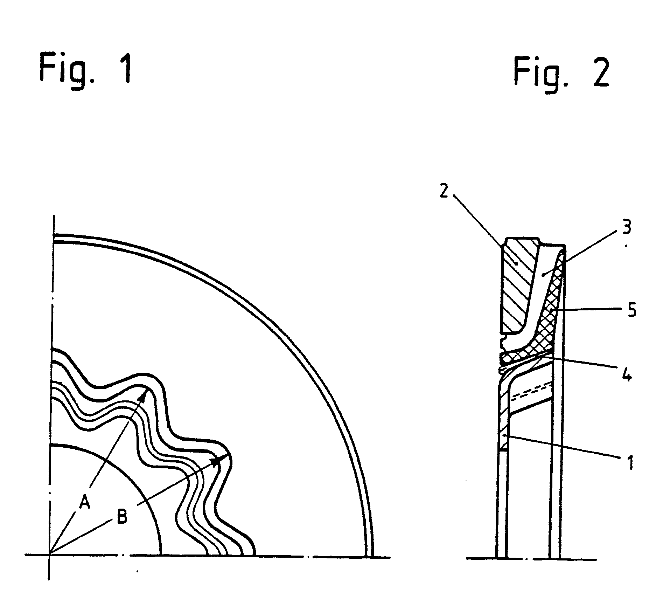

Der in den Figuren 1 und 2 gezeigte Torsionsschwingungsdämpfer umfaßt den Nabenring 1 und den Schwungring 2, die durch einen in dem radialen Zwischenraum angeordneten Dämpfungskörper verbunden sind, wobei der Dämpfungskörper einen Außenring 3 und einen Innenring 4 umfaßt. Der Außenring ist an einander axial gegenüberliegenden Haftflächen des Trägheitsringes 2 und des Winkelringes 5 haftend festgelegt, der Innenring 4 an einander radial gegenüberliegenden Haftflächen des Nabenringes 4 und des Winkelringes 5.

Der Außenring 3 und der Innenring 4 bestehen aus Gummimischungen einer voneinander abweichenden Zusammensetzung. Hierdurch wird erreicht, daß sich in Umfangsrichtung und in Längsrichtung voneinander verschiedene Dämpfungswirkungen ergeben, die in optimaler Weise an die Erfordernisse des vorgesehenen Anwendungsfalles angepaßt sind.

Die den Innenring 4 radial innen- und außenseitig begrenzenden Haftflächen des Nabenringes 1 und des Winkelringes 5 umschließen die Rotationsachse in sich stetig verändernden Radialabständen A und B. Hierdurch ergibt sich eine in Umfangsrichtung fortgesetzte Wellung, wodurch die Haftfläche beiderseits vergrößert ist. Auch in bezug auf den aus Kunststoff und Aluminium bestehenden Winkelring 5 ist daher unter normalen Betriebsbedingungen ein Abreißen des aus gummielastischem Werkstoff bestehenden Innenringes 4 nicht zu befürchten.

Der Nabenring 1 besteht aus einem tiefgezogenen Stahlblech und hat dadurch eine im wesentlichen topfförmige Gestalt. Sein Mantel ist in Umfangsrichtung gewellt und in Richtung der Mündung des Topfes zunehmend in radialer Richtung aufgeweitet. Hierdurch wird bei umlaufenden Torsionsschwingungsdämpfern eine gute Gummiwirkung erzielt, welche es in ausreichendem Maße gewährleistet, daß der Innenring 4 unter normalen Betriebsbedingungen hinreichend gekühlt wird.

Der Außenring 3 hat bei der dargestellten Ausführungsform insbesondere Torsionsbeanspruchungen aufzunehmen. Er wird dadurch vor allem im Bereich seines Außenumfanges in hohem Maße elastisch deformiert. Auch diese Deformationen können indessen durch die gute Kühlwirkung der in axialer Richtung dicht benachbarten und sich in radialer Richtung erstreckenden Teile des Trägheitsringes 2 und des Winkelringes 5 nicht zum Auftreten einer materialschädigenden Erwärmung führen. Selbst extreme Drehschwingungen können dadurch problemlos aufgefangen werden.

**Patentansprüche**

1. Torsionsschwingungsdämpfer mit einer Rotationsachse, bei dem der Naben- und der Schwungring (1, 2) durch einen in dem radialen Zwischenraum angeordneten Dämpfungskörper (3, 4, 5) verbunden sind, wobei der Dämpfungskörper einen Außenring (3) und einen Innenring (4) aus Gummi sowie einen darzwischen liegenden Winkelring (5) umfaßt, wobei der Außenring (3) an einander axial gegenüberliegenden Haftflächen des Trägheitsringes (2) und des Winkelringes (5) und der Innenring (4) an einander radial gegenüberliegenden Haftflächen des Nabenringes (1) und des Winkelringes (5) festgelegt ist und wobei der Innenring (4) gegenüber dem Naben- und dem Winkelring (1, 5) durch weitere Haftflächen begrenzt ist, die die Rotationsachse in sich stetig verändernden Radialabständen (A, B) umschließen, dadurch gekennzeichnet, daß die weiteren Haftflächen in Umfangsrichtung gewellt sind und aus Teilbereichen unterschiedlich großer Radialabstände (A, B) von der Rotationsachse bestehen, die gleichmäßig ineinander übergehend ausgebildet sind.

2. Torsionsschwingungsdämpfer nach Anspruch 1, dadurch gekennzeichnet, daß der Winkelring (5) aus Kunststoff besteht.

3. Torsionsschwingungsdämpfer nach Anspruch 1 oder 2, dadurch gekennzeichnet, daß der radiale Zwischenraum zwischen dem Nabenring (1) und dem Trägheitsring (2) vollständig durch den Innenring (4), den Außenring (3) und den Winkelring (5) ausgefüllt ist.

**Claims**

1. A torsional vibration damper with a rotation axis, in which the hub ring (1) and the fly-ring (2) are connected by a damping body (3, 4, 5) arranged in the radial interspace, the damping body comprising an outer ring (3) and an inner ring (4) of rubber and an angle ring (5) lying between them, the outer ring (3) being fixed

3

on axially mutually opposite adhesion surfaces of the inertia ring (2) and of the angle ring (5) and the inner ring (4) being fixed on radially mutually opposite adhesion surfaces of the hub ring (1) and of the angle ring (5) and the inner ring (4) being delimited in relation to the hub ring (1) and the angle ring (5) by further adhesion surfaces which surround the rotation axis at continuously changing radial distances (A, B), characterised in that the further adhesion surfaces are wavy in the circumferential direction and are composed of subregions at different radial distances (A, B) from the rotation axis, which are designed to merge uniformly into one another.

2. A torsional vibration damper according to Claim 1, characterised in that the angle ring (5) is composed of plastic.

3. A torsional vibration damper according to Claim 1 or 2, characterised in that the radial interspace between the hub ring (1) and the inertia ring (2) is completely filled by the inner ring (4), the outer ring (3) and the angle ring (5).


**Revendications**

1. Amortisseur de vibrations de torsion avec un axe de rotation dans lequel la bague de moyeu (1) et la bague oscillante (2) sont assemblées par un élément d'amortissement (3, 4, 5) disposé dans l'interstice radial tandis que l'élément d'amortissement est constitué d'une bague extérieure (3) et d'une bague intérieure (4) en caoutchouc ainsi que d'une bague angulaire (5) située entre celles-ci, dans lequel la bague extérieure (3) est fixée aux surfaces d'adhérence opposées axialement l'une à l'autre de la bague d'inertie (2) et de la bague angulaire (5), dans lequel la bague intérieure (4) est fixée aux surfaces d'adhérence opposées axialement l'une à l'autre de la bague de moyeu (1) et de la bague angulaire (5), et dans lequel la bague intérieure (4) est délimitée par rapport à la bague de moyeu (1) et à la bague angulaire (5) par d'autres surfaces d'adhérence qui entourent l'axe de rotation, à des distances radiales (A, B) variant continuellement, caractérisé en ce que des surfaces d'adhérence supplémentaires sont ondulées dans la direction de la périphérie et sont constituées de zones partielles présentant des distances radiales (1, 5) différentes par rapport à l'axe de rotation et qui se continuent progressivement et régulièrement les unes les autres.

2. Amortisseur de vibrations de torsion selon la revendication 1, caractérisé en ce que la bague annulaire (5) est réalisée en matière plastique.

3. Amortisseur de vibrations de torsion selon la revendication 1 ou 2, caractérisé en ce que l'interstice radial entre la bague de moyeu (1) et la bague d'inertie (2) est complètement rempli par la bague intérieure (4), la bague extérieure (3) et la bague angulaire (5).

# Fig. 1

# Fig. 2